(19) Europäisches Patentamt
European Patent Office
Office européen des brevets

(11) EP 3 392 283 A1

(12) **EUROPEAN PATENT APPLICATION**
published in accordance with Art. 153(4) EPC

(43) Date of publication:
**24.10.2018 Bulletin 2018/43**

(21) Application number: **16875583.3**

(22) Date of filing: **12.12.2016**

(51) Int Cl.:
***C08G 18/48*** *(2006.01)* ***A47C 27/14*** *(2006.01)*
***C08G 18/00*** *(2006.01)* ***C08G 18/76*** *(2006.01)*
***C08G 101/00*** *(2006.01)* ***C08G 18/63*** *(2006.01)*
***C08G 18/66*** *(2006.01)* ***C08G 18/32*** *(2006.01)*
***C08G 18/40*** *(2006.01)*

(86) International application number:
**PCT/JP2016/086890**

(87) International publication number:
**WO 2017/104606 (22.06.2017 Gazette 2017/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **16.12.2015 JP 2015245709**

(71) Applicant: **Bridgestone Corporation**
**Tokyo 104-8340 (JP)**

(72) Inventors:
- **YOSHITOMI Kosuke**
  **Tokyo 104-8340 (JP)**
- **SEGUCHI Hideharu**
  **Tokyo 104-8340 (JP)**

(74) Representative: **Oxley, Robin John George**
**Marks & Clerk LLP**
**90 Long Acre**
**London WC2E 9RA (GB)**

# (54) SOFT POLYURETHANE FOAM AND SEAT PAD

(57) The present invention provides a soft polyurethane foam that is obtained by foam molding a foaming stock solution containing a polyol, diphenylmethane diisocyanate, a foaming agent, and a catalyst. The polyol includes a polyether polyol A having a weight average molecular weight (Mw) of 3,000 to 8,000 and 3 to 4 functional groups. The diphenylmethane diisocyanate (MDI) includes monomeric MDI in an amount of 80 mass% or more with respect to the total mass of the MDI. The monomeric MDI includes 4,4-MDI in an amount of 70 mass% or less with respect to the total mass of the MDI.

EP 3 392 283 A1

## Description

[Technical Field]

The present invention relates to a soft polyurethane foam used for various molded products such as automobile components and indoor household products, and a seat pad (seat cushioning material) using the soft polyurethane foam.
Priority is claimed on Japanese Patent Application No. 2015-245709, filed December 16, 2015, the content of which is incorporated herein by reference.

[Background Art]

Soft polyurethane foams are used for various applications such as a seat pad of a vehicle such as an automobile, a cushioning material for indoor chairs, bedding, and the like, and a buffering material for the flooring of houses. Various mechanical properties are required according to applications, and pleasant seating comfort is required for an automobile seat pad.
The applicant proposed a polyurethane foam of Patent Document 1 as a polyurethane foam that has an appropriate resilience, is lightweight, and has excellent vibration absorption characteristics. The polyurethane foam is a polyurethane foam obtained by foam molding a polyurethane foaming stock solution containing a polyol and isocyanate, and in which a polyether polyol whose molecular weight, degree of unsaturation, and molecular weight/number of functional groups are regulated such that they are within specific ranges is used as a main component, and an organically-treated inorganic filler is additionally added.

[Citation List]

[Patent Literature]

[Patent Document 1]

Japanese Unexamined Patent Application, First Publication No. 2008-127514

[Summary of Invention]

[Technical Problem]

The present invention provides a soft polyurethane foam having excellent mechanical properties and a seat pad formed of the soft polyurethane foam having excellent seating comfort and durability.

[Solution to Problem]

[1] A soft polyurethane foam that is obtained by foam molding a foaming stock solution containing a polyol, diphenylmethane diisocyanate, a foaming agent, and a catalyst,

> wherein the polyol includes a polyether polyol A having a weight average molecular weight (Mw) of 3,000 to 8,000 and 3 to 4 functional groups,
> wherein the diphenylmethane diisocyanate includes monomeric diphenylmethane diisocyanate in an amount of 80 mass% or more with respect to the total mass of the diphenylmethane diisocyanate, and
> wherein the monomeric diphenylmethane diisocyanate includes 4,4-diphenylmethane diisocyanate in an amount of 70 mass% or less with respect to the total mass of the monomeric diphenylmethane diisocyanate.

[Effects of Invention]

Since the soft polyurethane foam of the present invention has excellent mechanical properties, a seat pad formed of the soft polyurethane foam provides pleasant seating comfort, has excellent durability, and can prevent the occurrence of defects during production and use of a seat using the same.

[Description of Embodiments]

Exemplary embodiments of the present invention will be described below, but the present invention is not limited to the embodiments.

A soft polyurethane foam of the present invention is a soft polyurethane foam obtained by foam molding a foaming stock solution containing a polyol, diphenylmethane diisocyanate (MDI), a foaming agent, and a catalyst, and satisfies the following (A) to (C).

(A) The polyol includes a polyether polyol A having a weight average molecular weight (Mw) of 3,000 to 8,000 and 3 to 4 functional groups.
(B) The diphenylmethane diisocyanate (MDI) includes monomeric diphenylmethane diisocyanate (monomeric MDI) in an amount of 80 mass% or more with respect to the total mass of the MDI, and
(C) The monomeric MDI includes 4,4-diphenylmethane diisocyanate (4,4-MDI) in an amount of 70 mass% or less with respect to the total mass of the monomeric MDI.

<Polyol>

(Polyether polyol A)

The polyether polyol A contained in the foaming stock solution is a polyether polyol having a weight average molecular weight (Mw) of 3,000 to 8,000 and 3 to 4 functional groups (hydroxy groups). As the polyether polyol A, a polyether polyol obtained by ring-opening polymerization of an alkylene oxide is preferable because it has favorable reactivity.

Examples of the alkylene oxide include propylene oxide (PO) and ethylene oxide (EO). The alkylene oxides used as a material of the polyether polyol A may be of one type or two or more types.

The mixing ratio (mass ratio) between PO and EO contained in the polyether polyol A contained in the foaming stock solution is not particularly limited. For example, as EO/PO (mass ratio), 0/100 to 25/75 is preferable, and 0/100 to 20/80 is more preferable. When EO/PO (mass ratio) is within the above range, it is possible to easily obtain a soft polyurethane foam having excellent mechanical properties.

The number of hydroxy groups (functional groups) included in one molecule of the polyether polyol A contained in the foaming stock solution is preferably 3 to 4. Within such an appropriate range, the viscosity of the foaming stock solution becomes appropriate and it is possible to obtain a soft polyurethane foam having excellent physical properties.

The weight average molecular weight (Mw) of the polyether polyol A contained in the foaming stock solution is preferably 4,000 to 7,500, more preferably 4,500 to 7,000, and most preferably 5,000 to 6,500. When the weight average molecular weight of the polyether polyol A is 8,000 or less, the viscosity of the foaming stock solution becomes appropriate and the stirring efficiency becomes favorable. On the other hand, when the weight average molecular weight of the polyether polyol A is 3,000 or more, it is possible to obtain a soft polyurethane foam having an appropriate hardness.

Here, the weight average molecular weight (Mw) is a value calculated as a polystyrene equivalent value by gel permeation chromatography (GPC method).

The degree of unsaturation of the polyether polyol A contained in the foaming stock solution is preferably 0.03 milliequivalents/gram or less. When the degree of unsaturation is 0.03 milliequivalents/gram or less, it is possible to obtain a soft polyurethane foam having favorable physical properties such as durability. Here, the "degree of unsaturation" refers to the total degree of unsaturation (milliequivalents/gram) that is measured by a method in which mercury (II) acetate acts on unsaturated bonds of a sample, and released acetic acid is titrated with potassium hydroxide according to Japanese Industrial Standards JIS K 1557-1970.

The polyether polyol A contained in the foaming stock solution may be of one type or two or more types.

Here, as an optional component, in addition to the polyether polyol A, a polyether polyol B having a weight average molecular weight (Mw) of 1,000 to 4,000 and 2 functional groups may be also be used. Features of the polyether polyol B other than the weight average molecular weight (Mw) and the number of functional groups can be the same as those of the polyether polyol A, and one type or two or more types of polyether polyol B can be used. When the polyether polyol B is used, it is possible to improve the mechanical strength of the soft polyurethane foam.

In order to easily impart desired physical properties to the soft polyurethane foam obtained by foam molding the foaming stock solution, the total amount of one type or two or more types of poly ether polyol corresponding to the polyether polyol A with respect to the total mass of the polyol contained in the foaming stock solution is preferably 60 mass% or more, more preferably 70 mass% to 95 mass%, and most preferably 80 mass% to 90 mass%. In addition, for the same reason, the total amount of one type or two or more types of polyether polyol corresponding to the polyether polyol B with respect to the total mass of the polyol contained in the foaming stock solution is preferably 0 mass% to 30 mass% and more preferably 1 mass% to 15 mass%.

For the polyol contained in the foaming stock solution, a polymer polyol A' that is a component different from the polyether polyol A may also be used. The "polymer polyol" generally refers to a polymer composition or a mixture obtained by polymerizing an ethylenically unsaturated compound in a polyether polyol, and a polymer polyol that is widely used for a polyurethane foam molded product can be used. For example, a polymer polyol obtained by graft copolymerization of a polymer component such as polyacrylonitrile or an acrylonitrile-styrene copolymer (AN/ST copolymer) in a polyether polyol which includes a polyalkylene oxide and has a weight average molecular weight (Mw) of 3,000 to 8,000 and more preferably 4,000 to 7,000, may be used. As the alkylene oxide used as a material of the polyalkylene oxide, an alkylene oxide including propylene oxide (PO) as a functional group (polymerizable group) is preferable, and an alkylene oxide including only propylene oxide or an alkylene oxide including both propylene oxide and ethylene oxide (EO) are more preferable. In addition, the amount of the polymer component with respect to the total mass of the polymer polyol A' is preferably 10 mass% to 50 mass%.

When the polyether polyol A and the polymer polyol A' are used together as the polyol contained in the foaming stock solution, the polyether polyol A/polymer polyol A' (mass ratio) is preferably 70/30 to 99/1, more preferably 80/20 to 99/1, and most preferably 85/15 to 99/1. Within the above range, it is possible to easily obtain a soft polyurethane foam having desired physical properties.

(Polyol C)

In addition, for the polyol contained in the foaming stock solution, in addition to the polyol A (and the polyol B), a polyol C functioning as a communicating agent allowing bubbles of the soft polyurethane foam to be connected may be used. As the polyol C, a polyol containing a largest amount of [EO groups] among alkyleneoxy groups constituting a framework of a polyol, that is, a polyether polyol having an amount of [EO groups] that is larger than an amount of alkyleneoxy groups (such as alkyleneoxy groups having 3 carbon atoms and alkyleneoxy groups having 4 carbon atoms) other than [EO groups] based on mass is preferable. In addition, the polyol C is preferably a polyol in which [EO groups] are randomly distributed in a molecular chain, that is, a polyether polyol having a random copolymerization structure.

In addition, a hydroxyl value (unit: mg KOH/g) of the polyol C is 200 or less, preferably 150 or less, and more preferably 100 or less, and the hydroxyl value of the polyol C is calculated by the following formula.

$$\text{Hydroxyl value} = 56{,}100 \div \text{weight average molecular weight} \times \text{number of functional groups}$$

When the polyol C is used as the above communicating agent, the durability of the soft polyurethane foam is improved. Regarding the amount of the polyol C, in order to obtain the effect of improving the durability, the total amount of the polyol C with respect to the total weight of the polyol contained in the foaming stock solution is preferably 0.1 weight% or more, more preferably 1 mass% to 10 mass%, and most preferably 2 mass% to 7 mass%.

<Diphenylmethane diisocyanate>

For the diphenylmethane diisocyanate (MDI) contained in the foaming stock solution, monomeric MDI is contained in an amount of 80 mass% or more with respect to the total mass of the MDI. The monomeric MDI contains 4,4-diphenylmethane diisocyanate (4,4-MDI) in an amount of 70 mass% or less with respect to the total mass of the monomeric MDI. When such MDI is used, it is possible to significantly improve mechanical properties of the soft polyurethane foam. The composition of the MDI which is preferable for obtaining the effect of improving mechanical properties will be described below. As the MDI, only monomeric MDI may be used, or a combination of polymethylene polyphenyl polyisocyanate (polymeric MDI) and monomeric MDI may be used. However, when a combination thereof is used, the amount of monomeric MDI with respect to the total mass of the MDI is 80 mass% or more, preferably 85 mass% or more, and most preferably 90 mass% or more because then the mechanical strength is improved. Here, the polymeric MDI is a generic name for compounds represented by the following formula (1).

[Chem. 1]

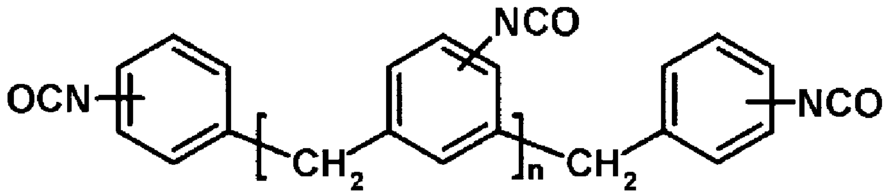

(1)

(in the formula, n denotes an integer of 1 or more)

Specific examples of the monomeric MDI include 4,4-diphenylmethane diisocyanate (4,4-MDI), 2,4-diphenylmethanediisocyanate (2,4-MDI), and 2,2-diphenylmethane diisocyanate (2,2-MDI) which are isomers of MDI. Among them, preferable monomeric MDI has an amount of 4,4-MDI with respect to the total mass of the monomeric MDI that is 70 mass% or less, preferably 50 mass% to 65 mass%, and most preferably 50 mass% to 60 mass%.

In addition, when there is 80 mass% or more of the monomeric MDI, an amount of the 4,4-MDI is preferably 70 mass% or less. In addition, when there is 95% to 100% of the monomeric MDI, an amount of the 4,4-MDI is preferably 60 mass% or less.

The MDI may be an untreated crude MDI obtained by an MDI synthesis reaction as long as the above requirements are satisfied or may be obtained by separating a desired amount of monomeric MDI from crude MDI by reduced □ pressure distillation and adjusting a composition. In addition, the separated monomeric MDI can be used alone or different types of monomeric MDI and polymeric MDI mixed at a predetermined ratio can be used.

In addition, when the polymeric MDI is used, the viscosity (at 25 □) of all of the MDI is preferably 5 mPa·s to 200 mPa·s. The above viscosity is more preferably 10 mPa·s to 150 mPa·s, and most preferably 15 mPa·s to 100 mPa·s.

The isocyanate index derived from MDI contained in the foaming stock solution is preferably 70 to 120 and more preferably 80 to 100. When the isocyanate index is 70 or more, it is possible to easily stir the foaming stock solution. When the isocyanate index is 120 or less, it is possible to prevent collapse of the foam and it is possible to easily obtain a more favorable foam.

The isocyanate index refers to a percentage of an amount actually added with respect to a stoichiometrically calculated required amount of polyisocyanate that reacts with all active hydrogen included in the polyol and the like in the foam material. For example, when the isocyanate index is 90, this means that 90% of the polyisocyanate by mass percentage is added with respect to a stoichiometrically required amount for reacting with all active hydrogen included in the polyol and the like in the foam material.

As an optional component, in addition to MDI in the above (C), a small amount of a known polyisocyanate other than MDI may be added. For example, tolylene diisocyanate (TDI), triphenyl diisocyanate, xylene diisocyanate, polymethylene polyphenylene polyisocyanate, hexamethylene diisocyanate, and isophorone diisocyanate are exemplary examples.

In order to easily impart desired physical properties to the soft polyurethane foam obtained by foam molding the foaming stock solution, the total amount of one type or two or more types of MDI with respect to the total mass of polyisocyanate contained in the foaming stock solution is preferably 70 mass% or more, more preferably 80 mass% to 100 mass%, still more preferably 90 mass% to 100 mass%, and most preferably 95 mass% to 100 mass%.

<Foaming agent>

As the foaming agent contained in the foaming stock solution, water is preferably used. Since water reacts with polyisocyanate and generates carbon dioxide gas, it functions as a foaming agent.

The amount of water in the foaming stock solution is preferably 1 to 7 parts by mass and more preferably 2 to 5 parts by mass with respect to 100 parts by mass of polyol. Within the above range, it is possible to easily obtain a soft polyurethane foam having desired physical properties. In addition, it is possible to prevent thermal compression residual strain characteristics of the obtained soft polyurethane foam from deteriorating.

<Catalyst>

As the catalyst contained in the foaming stock solution, a known catalyst used in the field of polyurethane foams may be used. Examples of known catalysts include an amine-based catalyst and a tin catalyst.

In general, known catalysts are roughly classified into gelling catalysts and blowing catalysts.

Gelling catalysts accelerate the synthesis of polyurethane by a reaction between the polyol and the polyisocyanate. A catalyst with a ratio of a blowing catalyst constant to a gelling catalyst constant (blowing catalyst constant/gelling catalyst constant) of 1 or less is called a gelling catalyst.

The blowing catalyst accelerates foaming of the polyurethane rather than gelling. A catalyst with a ratio of a blowing catalyst constant to a gelling catalyst constant of greater than 1 is called a blowing catalyst.

Here, the gelling catalyst constant is a constant used for determining a rate of a gelling reaction between polyols and polyisocyanates, and as a value thereof increases, a crosslinking density of a foamed product increases. Specifically, a reaction constant of a gelation reaction between tolylene diisocyanate and diethylene glycol is used. On the other hand, the blowing catalyst constant is a constant used for determining a rate of a foaming reaction between polyisocyanates and water, and as a value thereof increases, communicability of cells of a foamed product is improved. Specifically, a reaction constant of a foaming reaction between tolylene diisocyanate and water is used.

The gelling catalyst constant and the blowing catalyst constant are determined by a known method.

In the present invention, a catalyst containing both a gelling catalyst and a blowing catalyst is preferably used. When such a catalyst is used, it is possible to improve the mechanical strength of the soft polyurethane foam.

Examples of the gelling catalyst include tertiary amines such as triethylenediamine (TEDA), triethylenediamine, N,N,N',N'-tetramethylethylenediamine, N,N,N',N'-tetramethylpropylenediamine, N,N,N',N",N"-pentamethyl-(3-aminopropyl)ethylenediamine, N,N,N',N",N"-pentamethyldipropylenetriamine, N,N,N',N'-tetramethylguanidine, and 135-tris(N,N-dimethylaminopropyl)hexahydro-S-triazine; imidazoles such as 1-methylimidazole, 1,2-dimethylimidazole, and 1-isobutyl-2-methylimidazole; N,N,N',N' -tetramethylhexamethylenediamine, N-methyl-N'-(2-dimethylaminoethyl)piperazine, N,N'-dimethylpiperazine, N-methylpiperazine, N-methylmorpholine, and N-ethylmorpholine; and 1,8-diazabicyclo[5.4.0]undecene-7,1,1'-(3-(dimethylamino)propyl)imino)bis(2-propanol). As the gelling catalyst, a tertiary amine-based catalyst is preferable.

Examples of the blowing catalyst include bis(2-dimethylaminoethyl)ether, N,N,N',N",N"-pentamethyldiethylenetriamine, and N,N,N',N',N",N"'-hexamethyltriethylenetetramine. As the blowing catalyst, a tertiary amine-based catalyst is preferable.

In addition, for the gelling catalyst, in addition to the above amine-based catalysts, as the tin catalyst, known organotin catalysts, for example, stannous octoate, stannous laurate, dibutyltin dilaurate, dibutyltin dimaleate, dibutyltin diacetate, dioctyltin diacetate, and tin octylate, may be used. Both of the gelling catalyst and the blowing catalyst may be used in the form of a solution obtained by dilution with a known solvent such as dipropylene glycol and polypropylene glycol.

When the gelling catalyst and the blowing catalyst are used together, a mass ratio of gelling catalyst:blowing catalyst contained in the foaming stock solution is preferably 100:0 to 100:200. When the mass proportion of the blowing catalyst increases, it is possible to improve the mechanical strength of the soft polyurethane foam.

The amount of the amine-based catalyst in the foaming stock solution is preferably 0.1 to 5.0 parts by mass, more preferably 0.3 to 3.0 parts by mass, and most preferably 0.5 to 2.0 parts by mass with respect to 100 parts by mass of the polyol.

When the content is a lower limit value of the above range or more, it is possible to prevent collapse of the foam. When the content is an upper limit value of the above range or less, it is possible to prevent shrinkage due to excess closed cells.

The amount of the tin catalyst in the foaming stock solution is preferably 0.001 to 1 parts by mass with respect to 100 parts by mass of the polyol.

<Foam stabilizer>

A foam stabilizer may be contained in the foaming stock solution. As the foam stabilizer, a known foam stabilizer that is used in the field of polyurethane foams can be used. For example, a silicone-based foam stabilizer, an anionic foam stabilizer, and a cationic foam stabilizer may be used. Such foam stabilizers may include a foam stabilizer having a hydroxyl group at a molecular chain terminal.

The amount of the foam stabilizer in the foaming stock solution is preferably 0.1 to 5 parts by mass, more preferably 0.5 to 3 parts by mass, and most preferably 0.7 to 2 parts by mass with respect to 100 parts by mass of the polyol. In general, the effect as the foam stabilizer can be sufficiently obtained at a content proportion of 5 parts by mass or less. In addition, when a content proportion is 0.1 parts by mass or more, a stirring property of the polyol and the polyisocyanate is improved, and it is possible to easily obtain a soft polyurethane foam having desired physical properties.

<Other optional components >

Various additives can be added to the foaming stock solution as necessary. For example, a crosslinking agent, a coloring agent such as a pigment, a chain extender, a filler such as calcium carbonate, a flame retardant, an antioxidant, a UV absorber, a light stabilizer, a conductive substance such as carbon black, and an antimicrobial agent can be added.

The amounts of various additives added are appropriately adjusted according to applications and purposes.

<Method of preparing foaming stock solution>

A method of preparing the foaming stock solution is not particularly limited. For example, a preparation method in which a mixture (hereinafter referred to as a "polyol mixture" in some cases) including the remaining materials except for the polyisocyanate is prepared, and is then mixed with the polyisocyanate to obtain a foaming stock solution may be used.

When the polyol mixture is prepared, a known method may be used for mixing.

Then, in a process of foam molding a soft polyurethane foam, the polyol mixture and polyisocyanate may be mixed.

The viscosity of the prepared polyol mixture at a liquid temperature of 25 □ is preferably 4,000 mPa·s or less and more preferably 3,000 mPa·s or less. Within such an appropriate viscosity range, stirring efficiency of the foaming stock solution becomes favorable, a sufficient amount of foam is uniformly obtained from the entire foaming stock solution, and it is possible to easily obtain a soft polyurethane foam (foam molded product) having desired physical properties.

A method of foam molding the soft polyurethane foam using the foaming stock solution is not particularly limited. For example, a known method in which a foaming stock solution is injected into a cavity formed in a mold and foam molding is performed can be used.

In the above known method, a liquid temperature of the foaming stock solution injected is preferably 10 to 50□. A temperature of the mold is preferably 40 to 80□. When the liquid temperature of the foaming stock solution and the temperature of the mold are within the above appropriate range, it is possible to easily obtain an appropriate foam. Together with the foam, a polyol component and MDI are polymerized to form a polyurethane, and the polyurethane is cured as the polymerization proceeds. Then, when the mold is released, a desired soft polyurethane foam is obtained. Here, a known reticulation treatment may be additionally performed on the obtained soft polyurethane foam.

Here, the "softness" of the soft polyurethane foam according to the present invention refers to hardness (stiffness) to such an extent that the soft polyurethane foam is deformed and recessed when the soft polyurethane foam is pressed by hand or a user sits thereon.

[Examples]

The present invention will be described below in more detail with reference to examples. However, the present invention is not limited to the following examples.

[Examples 1 to 21 and Comparative Examples 1 to 5]

According to formulations shown in Tables 1 to 3, a mixture solution containing components other than MDI, and MDI were mixed together to prepare a foaming stock solution. (In the tables, units of amounts of materials are parts by mass unless otherwise specified). In this case, a liquid temperature of the polyurethane foaming stock solution was 25□. Next, immediately after the stock solution was prepared, this was foamed and·cured in a mold whose temperature was set to 60 □, the mold was released, and a polyurethane foam for a seat pad was obtained. The foaming stock solution was injected into a mold and foam-molded to produce a seat pad. The performance of the obtained seat pad was evaluated by the following measurement method.

The results are shown together in Tables 1 to 3.

[Table 1]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Polyether polyol A (PPG-1) | | 89 | 89 | 89 | 89 | 89 | 89 | 89 | 89 | 89 | 89 |
| Polyether polyol B (PPG-2) | B-1 | - | - | - | - | - | - | - | - | - | - |
| | B-2 | - | - | - | - | - | - | - | - | - | - |
| Polymer polyol A' (POP) | | 10 | 10 | 10 | 10 | 10 | 10 | 10 | 10 | 10 | 10 |
| Crosslinking agent | | 1 | 1 | 1 | 1 | 1 | 1 | 1 | 1 | 1 | 1 |
| Polyol C (communicating agent) | | - | - | - | - | - | - | - | - | - | - |
| Catalyst | Gelling catalyst | 0.60 | 0.60 | 0.60 | 0.60 | 0.60 | 0.60 | 0.60 | 0.60 | 0.60 | 0.60 |
| | Blowing catalyst | - | - | - | - | - | - | - | - | - | - |
| Foam stabilizer | | 0.8 | 0.8 | 0.8 | 0.8 | 0.8 | 0.8 | 0.8 | 0.8 | 0.8 | 0.8 |
| Foaming agent | | 3 | 3 | 3 | 3 | 3 | 3 | 3 | 3 | 3 | 3 |
| Sum | | 104.40 | 104.40 | 104.40 | 104.40 | 104.40 | 104.40 | 104.40 | 104.40 | 104.40 | 104.40 |
| MDI | Parts by mass | 45.77 | 45.77 | 45.77 | 45.77 | 45.77 | 45.77 | 45.77 | 45.77 | 45.77 | 45.77 |
| | Monomeric MDI (mass% with respect to total mass of MDI) | 81.4 | 81.4 | 85.6 | 85.6 | 85.6 | 90.7 | 90.7 | 90.7 | 94.6 | 94.6 |
| | Polymeric MDI (") | 18.6 | 18.6 | 14.4 | 14.4 | 14.4 | 9.3 | 9.3 | 9.3 | 5.4 | 5.4 |
| | 4,4-MDI (mass% with respect to total mass of monomeric MDI) | 70.0 | 64.0 | 70.0 | 65.5 | 61.0 | 70.0 | 63.5 | 57.0 | 70.0 | 62.0 |
| | 2,4-MDI (") | 30.0 | 36.0 | 30.0 | 34.5 | 39.0 | 30.0 | 36.5 | 43.0 | 30.0 | 38.0 |
| | NCO% | 32.8 | 32.8 | 33.0 | 33.0 | 33.0 | 33.2 | 33.2 | 33.2 | 33.4 | 33.4 |
| Foam state | | Normal | Normal | Normal | Normal | Normal | Normal | Normal | Normal | Normal | Normal |
| Performance | Elongation (%) | 109 | 108 | 121 | 119 | 118 | 143 | 141 | 127 | 153 | 119 |
| | Tensile strength (kPa) | 134 | 132 | 150 | 149 | 135 | 154 | 167 | 126 | 148 | 128 |
| | Tear strength (N/cm) | 7.7 | 7.7 | 8.6 | 8.9 | 8.3 | 9.2 | 11.3 | 8.8 | 10.3 | 11.7 |

[Table 2]

| | | Example 11 | Example 12 | Example 13 | Example 14 | Example 15 | Example 16 | Example 17 | Example 18 | Example 19 | Example 20 | Example 21 |
|---|---|---|---|---|---|---|---|---|---|---|---|---|
| Polyether polyol A (PPG-1) | | 89 | 89 | 89 | 79 | 79 | 88 | 89 | 89 | 90 | 90 | 90 |
| Polyether polyol B (PPG-2) | B-1 | - | - | - | 10 | - | - | - | - | - | - | |
| | B-2 | - | - | - | - | 10 | - | - | - | - | - | |
| Polymer polyol A' (POP) | | 10 | 10 | 10 | 10 | 10 | 10 | 10 | 10 | 10 | 10 | 10 |
| Crosslinking agent | | 1 | 1 | 1 | 1 | 1 | 1 | 1 | 1 | - | - | - |
| Polyol C (communicating agent) | | - | - | - | - | - | 1 | - | - | - | - | |
| Catalyst | Gelling catalyst | 0.60 | 0.60 | 0.60 | 0.60 | 0.60 | 0.60 | 0.50 | 0.25 | 0.25 | 0.25 | 0.25 |
| | Blowing catalyst | - | - | - | - | - | - | 0.10 | 0.35 | 0.35 | 0.35 | 0.35 |
| Foam stabilizer | | 0.8 | 0.8 | 0.8 | 0.8 | 0.8 | 0.8 | 0.8 | 0.8 | 0.8 | 0.8 | 0.8 |
| Foaming agent | | 3 | 3 | 3 | 3 | 3 | 3 | 3 | 3 | 3 | 3 | 3 |
| Sum | | 104.40 | 104.40 | 104.40 | 104.40 | 104.40 | 104.40 | 104.40 | 104.40 | 104.40 | 104.40 | 104.40 |

(continued)

| | | Example 11 | Example 12 | Example 13 | Example 14 | Example 15 | Example 16 | Example 17 | Example 18 | Example 19 | Example 20 | Example 21 |
|---|---|---|---|---|---|---|---|---|---|---|---|---|
| MDI | Parts by mass | 45.77 | 45.77 | 45.77 | 46.35 | 45.77 | 45.77 | 45.77 | 45.77 | 45.77 | 45.77 | 45.77 |
| | Monomeric MDI (mass% with respect to total mass of MDI) | 94.6 | 100.0 | 100.0 | 90.7 | 90.7 | 90.7 | 90.7 | 90.7 | 81.4 | 90.7 | 94.6 |
| | Polymeric MDI (") | 5.4 | 0.0 | 0.0 | 9.3 | 9.3 | 9.3 | 9.53 | 9.3 | 18.6 | 9.3 | 5.4 |
| | 4,4-MDI (mass% with respect to total mass of monomeric MDI) | 54.0 | 50.0 | 60.0 | 63.5 | 63.5 | 63.5 | 63.5 | 63.5 | 70 | 63.5 | 54.0 |
| | 2,4-MDI (") | 46.0 | 50.0 | 40.0 | 36.5 | 36.5 | 36.5 | 36.5 | 36.5 | 30 | 36.5 | 46.0 |
| | NCO% | 33.34 | 33.6 | 33.6 | 33.2 | 33.2 | 33.2 | 33.2 | 33.2 | 32.8 | 33.2 | 33.3 |
| Foam state | | Normal | Normal | Normal | Normal | Normal | Normal | Normal | Normal | Normal | Normal | Normal |
| Performance | Elongation (%) | 151 | 213 | 210 | 150 | 148 | 135 | 144 | 146 | 115 | 146 | 157 |
| | Tensile strength (kPa) | 148 | 203 | 205 | 173 | 173 | 161 | 171 | 170 | 139 | 171 | 155 |
| | Tearstrength (N/cm) | 10.6 | 12.9 | 13.4 | 11.9 | 11.8 | 10.9 | 11.7 | 11.6 | 8.1 | 11.6 | 11.2 |

[Table 3]

| | | Comparative Example 1 | Comparative Example 2 | Comparative Example 3 | Comparative Example 4 | Comparative Example 5 |
|---|---|---|---|---|---|---|
| Polyether polyol A (PPG-1) | | 89 | 89 | 89 | 89 | 89 |
| Polyether polyol B (PPG-2) | B-1 | - | - | - | - | - |
| | B-2 | - | - | - | - | - |
| Polymer polyol A' (POP) | | 10 | 10 | 10 | 10 | 10 |
| Crosslinking agent | | 1 | 1 | 1 | 1 | 1 |
| Polyol C (communicating agent) | | - | - | - | - | - |
| Catalyst | Gelling catalyst | 0.60 | 0.60 | 0.60 | 0.60 | 0.60 |
| | Blowing catalyst | - | - | - | - | - |
| Foam stabilizer | | 0.8 | 0.8 | 0.8 | 0.8 | 0.8 |
| Foaming agent | | 3 | 3 | 3 | 3 | 3 |
| Sum | | 104.40 | 104.40 | 104.40 | 104.40 | 104.40 |
| MDI | Parts by mass | 45.77 | 45.77 | 45.77 | 45.77 | 45.77 |
| | Monomeric MDI (mass% with respect to total mass of MDI) | 69.4 | 73.0 | 73.0 | 100.0 | 79.6 |
| | Polymeric MDI (") | 30.6 | 27.0 | 27.0 | 0.0 | 20.4 |
| | 4,4-MDI (mass% with respect to total mass of monomeric MDI) | 81.9 | 70.0 | 66.7 | 75.0 | 77.5 |
| | 2,4-MDI (") | 18.1 | 30.0 | 33.3 | 25.0 | 22.5 |
| | NCO% | 32.3 | 32.4 | 32.4 | 33.6 | 32.55 |
| Foam state | | Normal | Normal | Normal | Collapse | Collapse |
| Performance | Elongation (%) | 83 | 88 | 95 | - | - |
| | Tensile strength (kPa) | 95 | 95 | 99 | - | - |
| | Tear strength (N/cm) | 4.9 | 5.2 | 5.6 | - | - |

Details of the materials in Table 1 to Table 3 are as follows.

"PPG-1" was the polyether polyol A and an EO terminal polyol having 3 functional groups and a weight average molecular weight of 6,000 (SANNIX FA 921 commercially available from Sanyo Chemical Industries, Ltd.).
"PPG-2" was the polyether polyol B and had 2 functional groups, a weight average molecular weight of 2,000, and an EO/PO mass ratio = 0/100.
"PPG-3" was the polyether polyol B and had 2 functional groups, a weight average molecular weight of 4,000, and

an EO/PO mass ratio = 0/100.
"POP" was the polymer polyol A' (KC855 commercially available from Sanyo Chemical Industries, Ltd.).

The "crosslinking agent" was a polyether polyol (EO 100 mass%) having 4 functional groups, a weight average molecular weight of 400, and a hydroxyl value of 561 mg KOH/g.
The "communicating agent" was the polyol C (product name: Lupranol L2047 commercially available from BASF) having 3 functional groups, a hydroxyl value of 42 mg KOH/g and an EO/PO mass ratio = 81/19.
The "gelling catalyst" was a mixture of triethylenediamine (TEDA) (33 mass%) and dipropylene glycol (DPG) (67 mass%) (product name: DABCO (DABCO) 33LV commercially available from Air Products and Chemicals, Inc.).
The "blowing catalyst" was a mixture of bis(2-dimethylaminoethyl)ether (BDMEE) (23 mass%) and dipropylene glycol (DPG) (77 mass%) (commercially available from Tosoh Corporation, product name: ET33B).
The "foam stabilizer" was a silicone-based foam stabilizer (product name: Niax silicone L3627 commercially available from Momentive Performance Materials Inc.)
The "foaming agent" was water.
As "MDI", MDI3 was used in Example 12.
In Example 13 and Comparative Example 4, MDI2 and MDI3 were mixed at an arbitrary ratio to obtain mass% shown in the table.
In the other examples and comparative examples, MDI1, MDI2, and MDI3 were mixed at an arbitrary ratio to obtain a value of mass% shown in the table.
Details of MDI1, MDI2, and MDI3 are as follows.
"MDI1" (monomeric MDI at 40 mass%, polymeric MDI at 60 mass%, 90 mass% of 4,4-MDI in monomeric MDI, 10% of 2,4-MDI in monomeric MDI, and NCO% = 31),
**[0076]** "MDI2" (monomeric MDI at 100 mass%, 100 mass% of 4,4-MDI in monomeric MDI, and NCO% = 33.6), and
"MDI3" (monomeric MDI at 100 mass%, 50 mass% of 4,4-MDI in monomeric MDI, 50% of 2,4-MDI in monomeric MDI, and NCO% = 33.6) were mixed in in amounts shown in Tables 1 to 3.

<Method of evaluating foam state>

A foam state of the seat pad produced as above was evaluated as ""normal" when bubbles were maintained and did not contract after foam molding, and was evaluated as "collapse" when bubbles collapsed and contracted.

<Method of measuring mechanical properties>

The elongation, tensile strength, and tear strength were measured according to Japanese Industrial Standards JIS K 6400-5: 2012. The physical property values measured here were physical property values in the horizontal direction (a direction orthogonal to the vertical direction from a surface layer in the depth direction) of the seat pad.

<Evaluation results>

In Examples 1 to 21 in which an amount of monomeric MDI and an amount of 4,4-MDI were within the range of the present invention, the foam state in all the examples was normal, the elongation was 100% or more, the tensile strength was 100 kPa or more, and the tear strength was 7.7 N/cm or more. On the other hand, in Comparative Examples 1 to 3 in which an amount of monomeric MDI was less than the lower limit value of the present invention, the foam state in all the examples was normal, but the elongation, tensile strength, and tear strength were lower than those of Examples 1 to 21. In addition, in Comparative Examples 4 to 6 in which an amount of 4,4-MDI exceeded the upper limit value of the present invention, normal foam was not formed.
Based on such results, it can be clearly understood that it is possible to reliably obtain a soft polyurethane foam having excellent mechanical properties according to the present invention.
Components, combinations, and the like in the embodiments described above are only examples, and additions, omissions, substitutions, and other modifications of the components can be made without departing from the scope of the present invention.

[Industrial Applicability]

The present invention provides a soft polyurethane foam having excellent mechanical strength and a seat pad formed of the soft polyurethane foam. The soft polyurethane foam according to the present invention can be widely used for a seat pad for a vehicle.

## Claims

1. A soft polyurethane foam that is obtained by foam molding a foaming stock solution containing a polyol, diphenylmethane diisocyanate, a foaming agent, and a catalyst,
wherein the polyol includes a polyether polyol A having a weight average molecular weight (Mw) of 3,000 to 8,000 and 3 to 4 functional groups,
wherein the diphenylmethane diisocyanate includes monomeric diphenylmethane diisocyanate in an amount of 80 mass% or more with respect to the total mass of the diphenylmethane diisocyanate, and
wherein the monomeric diphenylmethane diisocyanate includes 4,4-diphenylmethane diisocyanate in an amount of 70 mass% or less with respect to the total mass of the monomeric diphenylmethane diisocyanate.

2. The soft polyurethane foam according to claim 1,
wherein the catalyst includes a gelling catalyst that accelerates synthesis of polyurethane by a reaction between the polyol and the polyisocyanate and a blowing catalyst that accelerates foaming of the polyurethane.

3. The soft polyurethane foam according to claim 1 or 2,
wherein the polyol further includes a polyether polyol B having a weight average molecular weight (Mw) of 1,000 to 4,000 and 2 functional groups.

4. A seat pad comprising the soft polyurethane foam according to any one of claims 1 to 3.

**INTERNATIONAL SEARCH REPORT**

International application No.
PCT/JP2016/086890

A. CLASSIFICATION OF SUBJECT MATTER
*C08G18/76*(2006.01)i, *A47C27/14*(2006.01)i, *C08G18/48*(2006.01)i, *C08G101/00* (2006.01)n

According to International Patent Classification (IPC) or to both national classification and IPC

B. FIELDS SEARCHED

Minimum documentation searched (classification system followed by classification symbols)
C08G18/00-18/87, A47C27/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2013-520559 A (BASF SE), 06 June 2013 (06.06.2013), claims 1 to 15; paragraphs [0009], [0046] to [0058] & US 2010/0160473 A1 claims 1 to 27; paragraphs [0011], [0047] to [0052] & WO 2011/106377 A1 & CN 102264790 A | 1-4 |
| X | JP 2003-520873 A (Huntsman International L.L.C.), 08 July 2003 (08.07.2003), claims 1 to 8; paragraphs [0052] to [0059] & US 2003/0087978 A1 claims 1 to 24; paragraphs [0059] to [0069] & WO 2001/053370 A1 & CN 1423668 A | 1-4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 January 2017 (31.01.17) | 07 February 2017 (07.02.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/086890

C (Continuation). DOCUMENTS CONSIDERED TO BE RELEVANT

| Category* | Citation of document, with indication, where appropriate, of the relevant passages | Relevant to claim No. |
|---|---|---|
| A | JP 2013-541630 A (Dow Global Technologies L.L.C.), 14 November 2013 (14.11.2013), claims 1 to 19; paragraphs [0011], [0012], [0064] to [0067] & US 2013/0274364 A1 claims 1 to 19; paragraphs [0079] to [0083] & WO 2012/061496 A1 & CN 103282398 A | 1-4 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015245709 A
- JP 2008127514 A